# EUROPEAN PATENT SPECIFICATION

(11) **EP 3 247 532 B1**
(45) Date of publication and mention of the grant of the patent: **03.11.2021**
(21) Application number: 16700875.4
(22) Date of filing: 14.01.2016
(51) Int. Cl.: B23Q 1/00, B23Q 3/18

(54) **DEVICE FOR DETACHABLE AND REPEATABLE POSITIONING OF TWO OBJECTS IN RELATION TO EACH OTHER**
VORRICHTUNG ZUR LÖSBAREN UND WIEDERHOLBAREN POSITIONIERUNG VON ZWEI OBJEKTEN IM VERHÄLTNIS ZUEINANDER
DISPOSITIF DE POSITIONNEMENT REPRODUCTIBLE ET DÉTACHABLE DE DEUX OBJETS L'UN PAR RAPPORT À L'AUTRE

(30) Priority: 20.01.2015 SE 1550042
(43) Date of publication of application: 29.11.2017
(73) Proprietor: Sundström, Erik, 163 55 Spånga (SE)
(72) Inventor: Sundström, Erik, 163 55 Spånga (SE)
(74) Representative: Ehrner & Delmar Patentbyrå AB
(86) International application number: PCT/EP2016/050649
(87) International publication number: WO 2016/116346

(56) References cited:
- EP-A1- 0 818 270
- EP-A1- 1 813 381
- EP-A1- 2 239 089
- EP-A1- 2 871 023
- WO-A1-88/10172
- DE-A1- 3 814 102
- DE-A1- 19 917 484
- JP-A- 2004 148 463
- US-A1- 2013 043 634

## Description

### Technical field

The present invention relates to a device for detachable and repeatable positioning of two objects in relation to each other according to the preamble of claim 1.

### Background

When placing e.g. a working table or a base plate on a milling machine table, it is important to be able to accurately position these two in relation to each other in order to be able to use the milling machine reference system for an object arranged on the working table.

Before the 1960:s a majority of the machining and measuring within the engineering industry took place by making relative measurements using e.g. micrometer calipers, sliding calipers and templates for dimensional accuracy. Drawings were produced manually to fit these manufacturing methods. The precision depended more on the skill of the workers and operators of the machines than the stability and the lack of freedom of play of the machines.

When numerically controlled machines for the production appeared on the market, the manufacturing methods began to be more and more automated and today the production is to a large extent more or less automated using e.g. CNC-controlled multioperation machines. The production of drawings and equipment for programming of the CNC-machines is also more or less completely computer based today.

During the above development of the production processes, the manufacturers of the machines have also minimized the previous problems of the machines being able to turn the input instructions to corresponding output process steps without accuracy problems. This is also the case regarding problems with temperature stability, freedom of play and elastic deformation.

The above enables for metalworking equipment to move to completely digitalized production by absolute coordinated originating from a given zero offset point using digital measurement and control systems and automated tool changing systems in the machines.

A reference system commonly used in e.g. machine shops is the Cartesian right-hand coordinate system. When talking about accurate positioning in machine shops and e.g. turning, milling and drilling, tolerances of 0.01 mm - 1 µm are considered "accurate", whereas tolerances smaller than 1 µm are often difficult to use in production applications as such tolerances often are difficult to measure in "real" production. Whereas it is relatively easy to achieve and maintain high tolerances in a laboratory environment, temperature changes and pollution as well as wear are issues that have to be handled in real production equipment whether it is manually operated or automated.

EP 0 291482 A shows a device for detachable and repeatable clamping of two objects to each other. EP 2 239 089 A1 discloses a positioning device according to the preamble of claim 1.

### Summary of the invention

The problem of detachable and repeatable positioning of two objects in relation to each other is solved according to the invention by a positioning device according to the characterizing portion of claim 1.

By that the positioning device comprises the features that a first XY-reference means is a disc spring with a in Z-direction tapered conical inner surface and the second XY-reference means is an element with an in Z-direction tapered conical outer surface, where further the first XY-reference means is arranged to be fixed to the first object and the second XY-reference means is arranged to be fixed to the second object, where in operating state of the positioning device the first object is positioned in the Z-direction in relation to the second object by that the second object is arranged to directly or indirecly, e.g. via at least one spacing device such as a distance piece, support the first object in the Z-direction, and where at the same time the conical outer surface of the second XY-reference means is arranged to abut and press against the conical inner surface of the first XY-reference means thus in turn accurately positioning the first object in relation to the second object in X- and Y-direction, is obtained the advantage of that a reproducible zero point can be created which enables to repeatedly and reproducibly position fixtures, tools, workpieces and pallets etc., which e.g. enables products to be both produced and used with the same references, to combine new and old machines together in production, and to with the same references produce different components which are later to be assembled together such as e.g. cylinder heads and engine blocks, and with the further advantage that this can be done with an accuracy sufficient for both automated and digitalized production and also manual production. A further advantage is that this can be done also in very difficult environmental conditions.

The positioning device is further universally usable between two objects that are to be positioned in relation to each other, is non-expensive to manufacture, and fills requirements for high precision as well as shows high endurance in tough workshop environments.

### Brief description of drawings

The invention will be described closer with the support of the attached drawings, where:
Figure 1 shows schematically a section of a positioning device for positioning of a first object in relation to a second object according to an embodiment of the invention,
Figure 2 shows schematically a section of a positioning device for positioning of a first object in relation to a second object according to another embodiment of the invention,
Figure 3 shows a top view of a punched piece of sheet for a first XY-reference means,
Figure 4 shows a side section of a detached first XY-reference means, and
Figure 5 shows a side section of the first XY-reference means in figure 3 fixed to the first object.

### Description of preferred embodiments

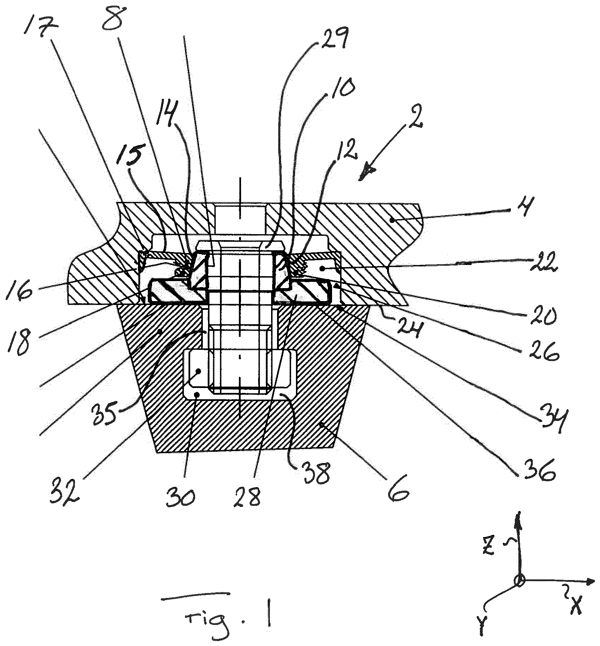

Figure 1 shows schematically a section of a positioning device 2 for positioning of a first object 4 in relation to a second object 6 according to an embodiment of the invention, where the positioning device 2 is shown in its mounted operating position. The positioning device 2 for detachable and repeatable positioning in X-, Y- and Z-directions of a first object 4 in relation to a second object 6 comprises a first XY-reference means 8 and a second corresponding XY-reference means 10, where the first XY-reference means 8 is a disc spring with a in Z-direction tapered conical inner surface 12 and the second XY-reference means 10 is an element with an in Z-direction tapered conical outer surface 14, where further the first XY-reference means 8 is arranged to be fixed to the first object 4 and the second XY-reference means 10 is arranged to be fixed to the second object 6, where in operating state of the positioning device 2 the first object 4 is positioned in the Z-direction in relation to the second object 6 by that the second object 6 is arranged to directly or indirectly, e.g. via at least one spacing device such as a distance piece, support the first object 4 in the Z-direction, and where at the same time the conical outer surface 14 of the second XY-reference means 10 is arranged to abut and press against the conical inner surface 12 of the first XY-reference means 8 thus in turn accurately positioning the first object 4 in relation to the second object 6 in X- and Y-direction. According to the embodiment shown in the figure, the second object 6 is arranged to directly support the first object 4 in the Z-direction without any intermediate distance device.

The first object 4 may e.g. be a working table, a base plate, a fixture, a pallet, a tool etc., and the second object 6 may e.g. be a machine table.

The edge of the conical inner surface 12 of the first XY-reference means 8 is preferably arranged with a stiffened rim 16, where the stiffened rim 16 preferably comprises plastically deformed parts 18, 20 of the first XY-reference means 8. The first XY-reference means 8 is a Belleville-spring, which is well suited for applying a flexible quality to the joint, as it has high fatigue life, low creep tendency and has a high load capacity with small spring deflection. The Belleville-spring is preferably made of austenitic stainless steel. The best locking position for the disc spring is reached when the annular surface 15 between the inner rim 16 and the outer rim 17 of the disc spring 8 is positioned in the XY-plane, but in order to avoid that this annular surface 15 "buckles away" from the second object 6, it is preferred that the said annular surface 15 of the disc spring 8 is arranged somewhat closer to the surface plane of the second object 6 at the inner rim 16 than the outer rim 17 of the disc spring 8.

The first object 4 preferably comprises a cavity 22, preferably open towards a surface 24 of the first object 4, in which cavity 22 the first XY-reference means 8 is arranged to be fixed. The first XY-reference means 8 is preferably arranged to be fixed against the inner wall 26 of the cavity 22 by a press-fit, e.g. if the first XY-reference means 8 is a disc spring, it is preferably mounted non-removably therein by pressing it therein e.g. using a mandrel. When the positioning device is calibrated, the spring disc can be somewhat upset. In operation, the disc spring is arranged to be as stiff as possible in the XY-plane, but arranged to be able to be elastically deformable about 0.5 mm in the Z-direction without being distorted, this in order to allow for accurate positioning in the XY-plane.

The second XY-reference means 10 is preferably arranged fixed to a clamping unit 28 arranged to be clamped to the second object 6, e.g. by that the second XY-reference means 10 is arranged integrated in a clamping unit 28 arranged to be clamped to the second object 6. The second XY-reference means 10 is preferably made of hard metal in order to withstand wear.

According to the embodiment shown in figure 1, the second object 6 comprises a cavity 30 arranged to receive and retain a clamping element 32 arranged to cooperate with the clamping unit 28 for clamping the clamping unit 28 to the second object 6, where the cavity 30 in the second object 6 is preferably arranged to have a cross-section of inverted T-shape where the narrower part 35 of the cavity 30 is arranged to open towards a surface 34 of the second object 6, and where the cavity 30 in the second object 6 in the operating state of the positioning device 2 is arranged to border on the cavity 22 in the first object 4 and the clamping unit 28 is arranged to be supported against the outer surface 34 of the second object 6 by a collar 36 when at the same time extending from within the cavity 22 in the first object 4 through the narrower part 35 and into the broader part 38 of the cavity 30 in the second object 6 wherein the clamping element 32 is arranged, whereby the clamping unit 28 is arranged to be clamped to the second object 6 by relative movement between the cooperating clamping unit 28 and clamping element 32. Preferably, the clamping unit 28 comprises an externally threaded bolt 29 and the clamping element 32 is a corresponding nut, where both the threaded bolt and the nut are preferably made of steel, but may also be made of e.g. hard metal.

The cone angle of the respective reference means can e.g. be 12°.

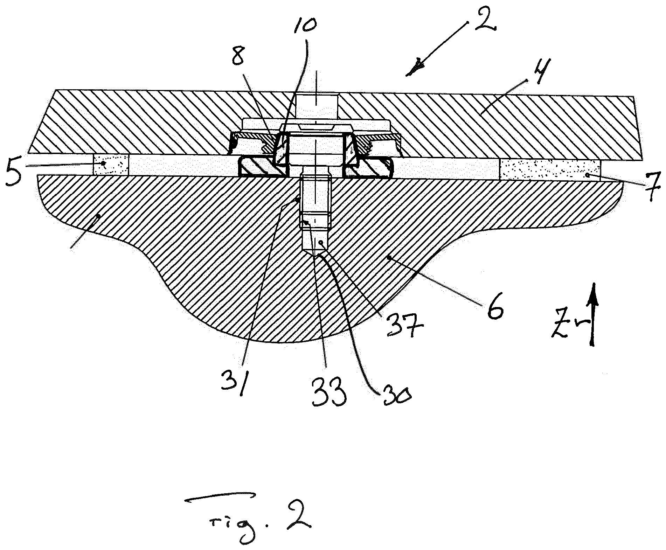

Figure 2 shows schematically a section of a positioning device for positioning of a first object in relation to a second object according to another embodiment of the invention. This embodiment differs from the one shown in figure 1 in that the second object 6 comprises a cavity 30 arranged to receive and retain the clamping unit 28 for clamping the clamping unit 28 to the second object 6, preferably by that the clamping unit 28 comprises an externally threaded 31 body 37 preferably made of steel, or optionally made of e.g. hard metal, where the cavity 30 in the second object 6 is arranged to have a corresponding inner thread 33 arranged to cooperate with said external thread 31 arranged on the surface of the externally threaded body 37, whereby the clamping unit 28 is arranged to be clamped to the second object 6 by cooperation between the above mentioned threads 31, 33. This embodiment also differs from the one shown in figure 1 in that the positioning device 2 further comprises at least one distance device 5, 7, preferably three distance devices arranged in a triangular configuration, i.e. not along the same straight line, and that the second object 6 is arranged to indirectly support the first object 4 in the Z-direction via the at least one distance device 5, 7, and that the centre of the positioning device 2 is situated within said triangle.

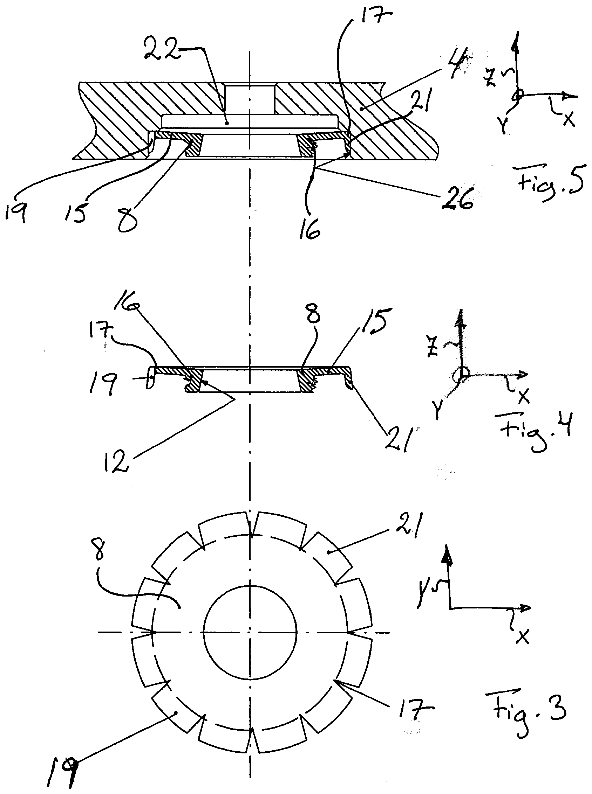

Figure 3 shows a top view of a punched piece of sheet for a first XY-reference means 8 of a disc-spring type. As can be seen in the figure, the edge of the outer rim 17 of the punched piece of sheet for a first XY-reference means 8 is preferably arranged with tongues 19, 21, which tongues 19, 21 are bent (see figure 4 and 5) during the finishing of the first XY-reference means of disc-spring type.

Figure 4 shows a side section of a detached first XY-reference means. As can be seen in the figure, the edge of the conical inner surface 12 of the first XY-reference means 8 is preferably arranged with a stiffened rim 16. As can further be seen in the figure, the edge of the outer rim 17 of the first XY-reference means 8 is preferably arranged with tongues 19, 21, which tongues 19, 21 are arranged bent away from the direction of insertion of the first XY-reference means 8 into the cavity in the first object (not shown in the figure). As mentioned above, the first XY-reference means 8 is preferably a Belleville-spring. The best locking position for the disc spring is reached when the annular surface 15 between the inner rim 16 and the outer rim 17 of the disc spring 8 is positioned in the XY-plane, but in order to avoid that this annular surface 15 "buckles away" from the second object (not shown in the figure), it is preferred that the said annular surface 15 of the disc spring 8 is arranged somewhat closer to the surface plane of the second object at the inner rim 16 than the outer rim 17 of the disc spring 8.

Figure 5 shows a side section of the first XY-reference means in figure 3 fixed to the first object 4. The shape of the disc spring 8 in this figure differs from the one shown in figure 4 in that the annular surface 15 between the inner rim 16 and the outer rim 17 of the disc spring 8 - and thus also the inner rim 16 of the disc spring 8 - is positioned further into the cavity 22 in the first object 4, and in that the outer ends of the tongues 19, 21 on the disc spring 8 are angled more towards the inner rim 16 of the disc spring 8 by the force exerted on them by the inner wall 26 of the cavity 22 when the disc-spring 8 is pressed therein. The outer ends of the tongues 19, 21 are pressed into the inner wall 26 of the cavity 22 thus preventing removal of the disc-spring 8 from the first object 4.

No distance device is shown in figure 1, whereas two distance devices 5, 7 are shown in figure 2. It is according to the invention possible in a third embodiment (not shown in the figures) to arrange the embodiment shown in figure 1 with at least one distance device, and in a fourth embodiment (also not shown in the figures) to arrange the embodiment shown in figure 2 without any distance device. Thus, the second object is according to the third embodiment arranged to indirectly support the first object in the Z-direction via at least one distance device, and the second object is according to the fourth embodiment arranged to directly support the first object in the Z-direction without any intermediate distance device.

By that the reference surfaces can be protected from the surrounding environment, e.g. by submitting the cavity 22 in the first object (not shown) to overpressure by feeding it with overpressurized air, the positioning can be done reproducingly also in very difficult environmental conditions as the reference surfaces can be kept clean. This also enables a system with automatic leak detection where an air leak from the cavity 22 indicates that the reference surfaces have not been accurately positioned.

## Claims

1. Positioning device (2) for detachable and repeatable positioning in X-, Y- and Z-directions of a first object (4) in relation to a second object (6), the positioning device (2) comprising a first XY-reference means (8) and a second corresponding XY-reference means (10), wherein the first XY-reference means (8) is a disc spring with an in Z-direction tapered conical inner surface (12) and the second XY-reference means (10) is an element with an in Z-direction tapered conical outer surface (14), where further the first XY-reference means (8) is arranged to be fixed to the first object (4) and the second XY-reference means (10) is arranged to be fixed to the second object (6), where in operating state of the positioning device (2) the first object (4) is positioned in the Z-direction in relation to the second object (6) by that the second object (6) is arranged to, directly or indirectly, support the first object (4) in the Z-direction, and where at the same time the conical outer surface (14) of the second XY-reference means (10) is arranged to abut and press against the conical inner surface (12) of the first XY-reference means (8), wherein said first XY-reference means (8) is arranged to be as stiff as possible in the XY-plane, but arranged to be elastically deformable in the Z-direction, thus in turn accurately positioning the first object (4) in relation to the second object (6) in X- and Y-direction,
**characterised in that** the disc spring is a belleville-spring.

2. Positioning device (2) according to claim 1, **characterized in, that** the positioning device further comprises at least one distance device (5, 7), and that the second object (6) is arranged to indirectly support the first object (4) in the Z-direction via the at least one distance device (5, 7).

3. Positioning device (2) according to claim 1 or 2, **characterized in, that** the edge of the conical inner surface (12) of the first XY-reference means (8) is arranged with a stiffened rim (16).

4. Positioning device (2) according to claim 3, **characterized in, that** the stiffened rim (16) comprises plastically deformed parts (18, 20) of the first XY-reference means (8).

5. Positioning device (2) according to one of claims 1 to 4, **characterized in, that** the first object (4) comprises a cavity (22) wherein the first XY-reference means (8) is arranged to be fixed.

6. Positioning device (2) according to claim 5, **characterized in, that** the cavity (22) is open towards a surface (24) of the first object (4).

7. Positioning device (2) according to claim 6, **characterized in, that** the first XY-reference means (8) is arranged to be fixed against the inner wall (26) of the cavity (22) by a press-fit.

8. Positioning device (2) according to one of claims 1-7, **characterized in, that** the second XY-reference means (10) is arranged fixed to a clamping unit (28) arranged to be clamped to the second object (6).

9. Positioning device (2) according to one of claims 1-7, **characterized in, that** the second XY-reference means (10) is arranged integrated in a clamping unit (28) arranged to be clamped to the second object (6).

10. Positioning device (2) according to claim 8 or 9, **characterized in, that** the second object (6) comprises a cavity (30) arranged to receive and retain a clamping element (32) arranged to cooperate with the clamping unit (28) for clamping the clamping unit (28) to the second object (6).

11. Positioning device (2) according to claim 10, **characterized in, that** the cavity (30) in the second object (6) is arranged to have a cross-section of inverted T-shape where the narrower part (35) of the cavity (30) is arranged to open towards a surface (34) of the second object (6), and where the cavity (30) in the second object (6) in the operating state of the positioning device (2) is arranged to border on the cavity (22) in the first object (4) and the clamping unit (28) is arranged to be supported against the outer surface (34) of the second object (6) by a collar (36) when at the same time extending from within the cavity (22) in the first object (4) through the narrower part (35) and into the broader part (38) of the cavity (30) in the second object (6) wherein the clamping element (32) is arranged, whereby the clamping unit (28) is arranged to be clamped to the second object (6) by relative movement between the cooperating clamping unit (28) and clamping element (32).

12. Positioning device (2) according to claim 11, **characterized in, that** the clamping unit (28) comprises an externally threaded bolt (29) and the clamping element (32) is a corresponding nut.

13. Positioning device (2) according to claim 8 or 9, **characterized in, that** the second object (6) comprises a cavity (30) arranged to receive and retain the clamping unit (28) for clamping the clamping unit (28) to the second object (6).

14. Positioning device (2) according to claim 13, **characterized in, that** the clamping unit (28) comprises an externally threaded (31) body (37), where the cavity (30) in the second object (6) is arranged to have a corresponding inner thread (33) arranged to cooperate with said external thread (31) arranged on the surface of the externally threaded body (37).

## Patentansprüche

1. Positionierungsvorrichtung (2) zur lösbaren und wiederholbaren Positionierung in X-, Y- und Z-Richtung eines ersten Objekts (4) in Beziehung zu einem zweiten Objekt (6), wobei die Positionierungsvorrichtung (2) ein erstes XY-Bezugsmittel (8) und ein zweites entsprechendes XY-Bezugsmittel (10) umfasst, wobei das erste XY-Bezugsmittel (8) eine Scheibenfeder mit einer sich in Z-Richtung verjüngenden konischen inneren Oberfläche (12) ist und das zweite XY-Bezugsmittel (10) ein Element mit einer sich in Z-Richtung verjüngenden konischen äußeren Oberfläche (14) ist, wobei ferner das erste XY-Bezugsmittel (8) dazu angeordnet ist, an dem ersten Objekt (4) befestigt zu werden, und das zweite XY-Bezugsmittel (10) dazu angeordnet ist, an dem zweiten Objekt (6) befestigt zu werden, wobei im Betriebszustand der Positionierungsvorrichtung (2) das erste Objekt (4) in der Z-Richtung in Beziehung zum zweiten Objekt (6) positioniert ist, dadurch, dass das zweite Objekt (6) dazu angeordnet ist, direkt oder indirekt, das erste Objekt (4) in der Z-Richtung zu unterstützen, und wobei zur gleichen Zeit die konische äußere Oberfläche (14) des zweiten XY-Bezugsmittels (10) dazu angeordnet ist, an der konischen inneren Oberfläche (12) des ersten XY-Bezugsmittels (8) anzuliegen und dagegen zu drücken, wobei das erste XY-Bezugsmittel (8) dazu angeordnet ist, in der XY-Ebene so steif wie möglich zu sein, aber dazu angeordnet ist, in der Z-Richtung elastisch verformbar zu sein, so seinerseits das erste Objekt (4) in X- und Y-Richtung genau in Beziehung zum zweiten Objekt (6) zu positionieren, **dadurch gekennzeichnet, dass** die Scheibenfeder eine Tellerfeder ist.

2. Positionierungsvorrichtung (2) nach Anspruch 1, **dadurch gekennzeichnet, dass** die Positionierungsvorrichtung ferner zumindest eine Abstandsvorrichtung (5, 7) umfasst und dass das zweite Objekt (6) dazu angeordnet ist, das erste Objekt (4) in der Z-Richtung über die zumindest eine Abstandsvorrichtung (5, 7) indirekt zu unterstützen.

3. Positionierungsvorrichtung (2) nach Anspruch 1 oder 2, **dadurch gekennzeichnet, dass** der Rand der konischen inneren Oberfläche (12) des ersten XY-Bezugsmittels (8) mit einer versteiften Kante (16) angeordnet ist.

4. Positionierungsvorrichtung (2) nach Anspruch 3, **dadurch gekennzeichnet, dass** die versteifte Kante (16) plastisch verformte Teile (18, 20) des ersten XY-Bezugsmittels (8) umfasst.

5. Positionierungsvorrichtung (2) nach einem der Ansprüche 1 bis 4, **dadurch gekennzeichnet, dass** das erste Objekt (4) einen Hohlraum (22) umfasst, wobei das erste XY-Bezugsmittel (8) dazu angeordnet ist, fixiert zu sein.

6. Positionierungsvorrichtung (2) nach Anspruch 5, **dadurch gekennzeichnet, dass** der Hohlraum (22) in Richtung einer Oberfläche (24) des ersten Objekts (4) offen ist.

7. Positionierungsvorrichtung (2) nach Anspruch 6, **dadurch gekennzeichnet, dass** das erste XY-Bezugsmittel (8) dazu angeordnet ist, gegen die innere Wand (26) des Hohlraums (22) durch eine Presspassung fixiert zu sein.

8. Positionierungsvorrichtung (2) nach einem der Ansprüche 1-7, **dadurch gekennzeichnet, dass** das zweite XY-Bezugsmittel (10) fixiert an einer Klemmeinheit (28) angeordnet ist, die dazu angeordnet ist, an dem zweiten Objekt (6) angeklemmt zu werden.

9. Positionierungsvorrichtung (2) nach einem der Ansprüche 1-7, **dadurch gekennzeichnet, dass** das zweite XY-Bezugsmittel (10) in eine Klemmeinheit (28) integriert angeordnet ist, die dazu angeordnet ist, an dem zweiten Objekt (6) angeklemmt zu werden.

10. Positionierungsvorrichtung (2) nach Anspruch 8 oder 9, **dadurch gekennzeichnet, dass** das zweite Objekt (6) einen Hohlraum (30) umfasst, der dazu angeordnet ist, ein Klemmelement (32) aufzunehmen und zu halten, das dazu angeordnet ist, mit der Klemmeinheit (28) zusammenzuwirken zum Anklemmen der Klemmeinheit (28) am zweiten Objekt (6).

11. Positionierungsvorrichtung (2) nach Anspruch 10, **dadurch gekennzeichnet, dass** der Hohlraum (30) im zweiten Objekt (6) dazu angeordnet ist, einen Querschnitt einer invertierten T-Form aufzuweisen, wobei der schmalere Teil (35) des Hohlraums (30) dazu angeordnet ist, sich in Richtung einer Oberfläche (34) des zweiten Objekts (6) zu öffnen, und wobei der Hohlraum (30) im zweiten Objekt (6) im Betriebszustand der Positionierungsvorrichtung (2) dazu angeordnet ist, an den Hohlraum (22) im ersten Objekt (4) anzugrenzen und wobei die Klemmeinheit (28) dazu angeordnet ist, gegen die äußere Oberfläche (34) des zweiten Objekts (6) durch eine Einfassung (36) unterstützt zu werden, sich dabei gleichzeitig aus dem Inneren des Hohlraums (22) im ersten Objekt (4) durch den schmaleren Teil (35) und in den breiteren Teil (38) des Hohlraums (30) im zweiten Objekt (6) erstreckend, worin das Klemmelement (32) angeordnet ist, wobei die Klemmeinheit (28) dazu angeordnet ist, an dem zweiten Objekt (6) durch relative Bewegung zwischen der zusammenwirkenden Klemmeinheit (28) und dem Klemmelement (32) angeklemmt zu werden.

12. Positionierungsvorrichtung (2) nach Anspruch 11, **dadurch gekennzeichnet, dass** die Klemmeinheit (28) eine außen gewindete Schraube (29) umfasst und dass das Klemmelement (32) eine entsprechende Mutter ist.

13. Positionierungsvorrichtung (2) nach Anspruch 8 oder 9, **dadurch gekennzeichnet, dass** das zweite Objekt (6) einen Hohlraum (30) umfasst, der dazu angeordnet ist, die Klemmeinheit (28) aufzunehmen und zu halten, um die Klemmeinheit (28) am zweiten Objekt (6) anzuklemmen.

14. Positionierungsvorrichtung (2) nach Anspruch 13, **dadurch gekennzeichnet, dass** die Klemmeinheit (28) einen außen gewindeten (31) Körper (37) umfasst, wobei der Hohlraum (30) im zweiten Objekt (6) dazu angeordnet ist, ein entsprechendes inneres Gewinde (33) aufzuweisen, das dazu angeordnet ist, mit dem äußeren Gewinde (31), das an der Oberfläche des außen gewindeten Körpers (37) angeordnet ist, zusammenzuwirken.

## Revendications

1. Dispositif (2) de positionnement servant au positionnement détachable et reproductible dans des directions X, Y et Z d'un premier objet (4) par rapport à un second objet (6), le dispositif (2) de positionnement comportant un premier moyen (8) de référence en XY et un second moyen (10) correspondant de référence en XY, le premier moyen (8) de référence en XY étant un ressort en disque doté d'une surface intérieure conique (12) amincie dans la direction Z et le second moyen (10) de référence en XY étant un élément doté d'une surface extérieure conique (14) amincie dans la direction Z, le premier moyen (8) de référence en XY étant en outre agencé pour être fixé au premier objet (4) et le second moyen (10) de référence en XY étant agencé pour être fixé au second objet (6), le premier objet (4) étant, dans l'état de fonctionnement du dispositif (2) de positionnement, positionné dans la direction Z par rapport au second objet (6) par le fait que le second objet (6) est agencé pour soutenir, directement ou indirectement, le premier objet (4) dans la direction Z et, en même temps, la surface extérieure conique (14) du second moyen (10) de référence en XY étant agencée pour porter et appuyer contre la surface intérieure conique (12) du premier moyen (8) de référence en XY, ledit premier moyen (8) de référence en XY étant agencé pour être aussi rigide que possible dans le plan XY, mais agencé pour être élastiquement déformable dans la direction Z, positionnant ainsi à son tour précisément le premier objet (4) par rapport au second objet (6) dans les directions X et Y, **caractérisé en ce que** le ressort en disque est une rondelle Belleville.

2. Dispositif (2) de positionnement selon la revendication 1, **caractérisé en ce que** le dispositif de positionnement comporte en outre au moins un dispositif (5, 7) de distance, et **en ce que** le second objet (6) est agencé pour soutenir indirectement le premier objet (4) dans la direction Z par l'intermédiaire du ou des dispositifs (5, 7) de distance.

3. Dispositif (2) de positionnement selon les revendications 1 ou 2, **caractérisé en ce que** le bord de la surface intérieure conique (12) du premier moyen (8) de référence en XY est agencé avec un rebord rigidifié (16).

4. Dispositif (2) de positionnement selon la revendication 3, **caractérisé en ce que** le rebord rigidifié (16) comporte des parties (18, 20) déformées plastiquement du premier moyen (8) de référence en XY.

5. Dispositif (2) de positionnement selon l'une des revendications 1 à 4, **caractérisé en ce que** le premier objet (4) comporte une cavité (22) dans laquelle le premier moyen (8) de référence en XY est agencé pour être fixé.

6. Dispositif (2) de positionnement selon la revendication 5, **caractérisé en ce que** la cavité (22) est ouverte vers une surface (24) du premier objet (4).

7. Dispositif (2) de positionnement selon la revendication 6, **caractérisé en ce que** le premier moyen (8) de référence en XY est agencé pour être fixé contre la paroi intérieure (26) de la cavité (22) par un ajustement à force.

8. Dispositif (2) de positionnement selon l'une des revendications 1 à 7, **caractérisé en ce que** le second moyen (10) de référence en XY est agencé de façon fixée à une unité (28) de serrage agencée pour être serrée sur le second objet (6).

9. Dispositif (2) de positionnement selon l'une des revendications 1 à 7, **caractérisé en ce que** le second moyen (10) de référence en XY est agencé de façon intégrée dans une unité (28) de serrage agencée pour être serrée sur le second objet (6).

10. Dispositif (2) de positionnement selon la revendication 8 ou 9, **caractérisé en ce que** le second objet (6) comporte une cavité (30) agencée pour recevoir et retenir un élément (32) de serrage agencé pour coopérer avec l'unité (28) de serrage afin de serrer l'unité (28) de serrage sur le second objet (6).

11. Dispositif (2) de positionnement selon la revendication 10, **caractérisé en ce que** la cavité (30) dans le second objet (6) est agencé pour présenter une section droite en forme de T inversé où la partie plus étroite (35) de la cavité (30) est agencée pour s'ouvrir vers une surface (34) du second objet (6), et où la cavité (30) dans le second objet (6), dans l'état de fonctionnement du dispositif (2) de positionnement, est agencée pour jouxter la cavité (22) dans le premier objet (4) et l'unité (28) de serrage est agencée pour être soutenue contre la surface extérieure (34) du second objet (6) par une collerette (36) lorsqu'elle s'étend en même temps à partir de l'intérieur de la cavité (22) dans le premier objet (4), à travers la partie plus étroite (35) et jusque dans la partie plus large (38) de la cavité (30) dans le second objet (6) dans laquelle est agencé l'élément (32) de serrage, l'unité (28) de serrage étant ainsi agencée pour être serrée sur le second objet (6) par un mouvement relatif entre l'unité (28) de serrage et l'élément (32) de serrage qui coopèrent.

12. Dispositif (2) de positionnement selon la revendication 11, **caractérisé en ce que** l'unité (28) de serrage comporte un boulon (29) fileté extérieurement et l'élément (32) de serrage est un écrou correspondant.

13. Dispositif (2) de positionnement selon les revendications 8 ou 9, **caractérisé en ce que** le second objet (6) comporte une cavité (30) agencée pour recevoir et retenir l'unité (28) de serrage afin de serrer l'unité (28) de serrage sur le second objet (6).

14. Dispositif (2) de positionnement selon la revendication 13, **caractérisé en ce que** l'unité (28) de serrage comporte un corps (37) à filetage extérieur (31), la cavité (30) dans le second objet (6) étant agencée pour présenter un filetage intérieur (33) correspondant agencé pour coopérer avec ledit filetage externe (31) agencé sur la surface du corps (37) fileté extérieurement.
